(19) Europäisches Patentamt
European Patent Office
Office européen des brevets

(11) Publication number: **0 397 081 A2**

# (12) EUROPEAN PATENT APPLICATION

(21) Application number: **90108558.9**

(22) Date of filing: **07.05.90**

(51) Int. Cl.5: **C08F 2/06, C08F 297/00, C08F 4/16, C08F 210/10, //(C08F210/10,212:08)**

(30) Priority: **08.05.89 JP 114566/89**
**29.09.89 JP 254565/89**
**30.03.90 JP 80639/90**

(43) Date of publication of application:
**14.11.90 Bulletin 90/46**

(84) Designated Contracting States:
**DE FR GB IT**

(71) Applicant: **NIPPON ZEON CO., LTD.**
**6-1, 2-chome, Marunouchi, Chiyoda-ku**
**Tokyo(JP)**

(72) Inventor: **Tsunogae, Yasuo**
**Nippon Zeon Isogo-ryo, 2-15-33 Isogo, Isogo-ku**
**Yokohama-shi, Kanagawa-ken(JP)**
Inventor: **Hirokawa, Yoshitsugu**
**2-26-3-101 Kajiwara**
**Kamakura-shi, Kanagawa-ken(JP)**
Inventor: **Tahara, Shin-ichiro, Nippon Zeon Okurayama-ryo**
**873 Futoo-cho, Kohoku-ku Yokohama-shi**
**Kanagawa-ken(JP)**
Inventor: **Kitaoka, Masami, Nippon Zeon Aoba-ryo**
**10-9 Enokigaoka, Midori-Ku**
**Yokohama-shi, Kanagawa-ken(JP)**
Inventor: **Shimokawa, Yoshiharu, Nippon Zeon Okurayama-ryo**
**873 Futoo-cho, Kohoku-ku**
**Yokohama-Shi, Kanagawa-ken(JP)**

(74) Representative: **Kraus, Walter, Dr. et al**
**Patentanwälte Kraus, Weisert & Partner**
**Thomas-Wimmer-Ring 15**
**D-8000 München 22(DE)**

## (54) Process for preparation of polymer.

(57) In a process of polymerizing at least one cationically polymerizable vinyl monomer using an initiator consisting of Lewis acid and organic compound having group represented by the formula (1) functional

$$\begin{array}{c} R^1 \\ | \\ -C-X \\ | \\ R^2 \end{array} \qquad (1)$$

wherein $R^1$ represents hydrogen, an alkyl group or an aryl group, $R^2$ represents an alkyl or aryl group, and X represents halogen, an alkoxy group or an acyloxy group. a process for preparation of a polymer of the vinyl monomer which comprises the polymerization is carried out in the presence of amine.

EP 0 397 081 A2

## PROCESS FOR PREPARATION OF POLYMER

This invention relates to a process for preparation of a polymer by improved cationic polymerization of cationically polymerizable vinyl monomer. More detailedly, this invention relates to a process for preparing a polymer, block copolymer, end-functional polymer or macromonomer having a narrow molecular weight distribution, an optionally controlled molecular weight over a wide range from a low molecular weight to a high molecular weight, and an optionally controlled end structure by cationic polymerization in a controlled reaction rate.

Generally, when cationic polymerization of cationically polymerizable vinyl monomer is carried out using Lewis acid, a chain transfer reaction or termination reaction easily takes place due to unstableness of carbenium ion as growing species. Therefore, in such an instance it has been difficult to control the molecular weight of a polymer having a narrow molecular weight distribution, and further to obtain a block copolymer.

As for control of molecular weight of a polymer, several examples have been reported aiming at enhightening molecular weight. For example, it is shown in DE 2,057,953 and DE 2,110,682 that when isobutylene is cationically polymerized using Lewis acid in combination with proton-donating compound such as alcohol, the addition of the compounds such as amide, ester and pyridine to the polymerization system makes the molecular weight of polymer higher. However, it is difficult to obtain a polymer having controlled molecular weight and a narrow molecular weight distribution, and further it is substantially difficult to remove heat of polymerization sufficiently, since the polymerization reaction is completed within several tens of seconds.

Further, synthesis of block copolymer is indi dicated in US 3,994,993 and US 4,276,394. However, when these methods are employed, inevitable large amount of homopolymers as well as the block copolymer are formed, and thus fractionation procedure becomes necessary, and the polymerization process is complicated.

Living polymerization does not cause chain transfer reaction and termination reaction, and the control of molecular weight is easy, synthesis of block copolymer is possible, a copolymer having a narrow molecular weight distribution is obtained and control of polymerization rate is also possible. Thus, various trials have been made to find a living polymerization system in cationic polymerization.

Recently, examples of so-called living cationic polymerization have been reported wherein isomerization reaction of growing carbenium ion, chain transfer reaction and termination reaction are suppressed in cationic polymerization. For example, Higashimura, et al. (Macromolecules, 17, 265 (1984)) reports that cationic living polymerization is possible in polymerization of vinyl ether using combinated initiator of hydrogen iodide and iodine. However, polymerization using this initiator system had various problems, for example, that usable monomer is limited to monomer having alkoxy group of a large electron donating property and being rich in cationic polymerizability and the initiator is unstable and its handling is complicated.

On the other hand, Kennedy et al. (EP 206756 and EP 265053) showed by polymerizing olefin monomer such as isobutylene using organic carboxylic acid, ester or ether in combination of Lewis acid that cationic living polymerization is also possible in olefin monomer. However, this method had many disadvantage for industrial application.

Kennedy et al. uses boron trichloride as Lewis acid, by choice, having a small polymerization activity. The reason seems to be that if Lewis acid having a strong polymerization activity is used, various side reactions take place and thus control of molecular weight of the polymer becomes difficult. In fact, when titanium tetrachloride having a large polymerization activity is used, control of molecular weight of the polymer and of the polymerization rate is difficult. Further, polymerization rate is generally largely influenced by the dissociation state of ion pair of growing species in cationic polymerization, and thus polymerization rate lowers when nonpolar solvent such as butane or pentane is used wherein ionic pair does not dissociate. Therefore, when boron trichloride, which has a small polymerization activity, is used as Lewis acid, polymerization does not proceed unless polar solvent such as methyl chloride is used as solvent.

In the method of Kennedy et al., polar solvent which gives a good polymerization result is a poor solvent for the resulting polyisobutylene polymer, and thus when the molecular weight of polyisobutylene becomes 5000 or more, it precipitates in the system and reactivity of the growing species extremely becomes low. Therefore, in order to obtain a polymer having a high and controlled molecular weight, it is neccessary to carry out the polymerization in an extremely high polymerization rate so that the polymerization is completed before the polymer precipitates. However, in that case a large amount of heat is

generated in a short time. Further, in a poor solvent system, it is impossible to obtain a block copolymer by successive addition of a monomer due to precipitation of a polymer.

Further, U.S. Patent No. 4,870,144 discloses that living cationic polymerization is carried out in a particular mixed solvent. However, this method has the same disadvantages as in that of Kennedy et al., and cannot be regarded as a process of preparation of a polymer wherein molecular weight control is easy.

The object of this invention lies in providing a process capable of obtaining, in polymerization of cationically polymerizable vinyl monomer, polymer wherein control of its molecular weight over a wide range and control of its end structure are possible and moreover which has a narrow molecular weight distribution, in an optional polymerization rate.

As a result of vigorous study, the present inventors have found that the above object of the present invention can be accomplished by polymerizing cationically polymerizable vinyl monomer in the presence of amine using a initiator system consisting of organic compound having particular functional group and Lewis acid, and that a block copolymer can be synthesized by successively adding another vinyl monomer to the polymerization solution after completion of the first stage polymerization.

Thus, processes of the following 1, 2 and 3 are provided according to the present invention.

1. In a process of polymerizing at least one cationically polymerizable vinyl monomer using an initiator consisting of Lewis acid and organic compound having functional group represented by the formula (1)

$$-\overset{R^1}{\underset{R^2}{C}}-X \qquad (1)$$

wherein $R^1$ represents hydrogen, an alkyl group or an aryl group, $R^2$ represents an alkyl or aryl group, and X represents halogen, an alkoxy group or an acyloxy group, a process for preparation of a polymer of the vinyl monomer which comprises the polymerization is carried out in the presence of amine.

2. The process for preparation according to the above 1 wherein the polymer is a block copolymer.

3. The process for preparation of the block copolymer according to the above 2 which comprises, after substantially completion of polymerization of one cationically polymerizable vinyl monomer, successively adding another cationically polymerizable vinyl monomer to complete the polymerization.

Examples of organic compound having a functional group shown in the formula (1) (hereinafter referred to as initiator compound) are set forth below.

Examples of halogen compound include 2-chloro-2-phenylpropane, bis(2-chloro-2-propyl)benzene, tris-(2-chloro-2-propyl)benzene, bis(2-chloro-2-propyl)-t-butylbenzene, bis(2-chloro-2-propyl)bisphenyl, bis(2-chloro-2-propyl)phenanthrene, bis((2-chloro-2-propyl)phenyl)ethane, bis((2-chloro-2-propyl)phenyl)propane, 2-chloro-2,4,4-trimethylpentane, 2,4,4,6-tetramethyl-2,6-dichloroheptane, 2,4,6-trimethyl-2,4,6-trichloroheptane, 2,4-dimethyl-2,4-dichloropentane, 2,5-dimethyl-2,5-dichlorohexane, 2,5-dimethyl-2,5-dichloro-3-hexyne, 2,5,8-trimethyl-2,5,8-trichlorononane, triphenylchloromethane, 2-chloropropane, 2-chlorobutane, t-butyl chloride, α-chloroethylbenzene, etc.

Examples of comound having alkoxy group include 2-methoxy-2-phenylpropane, bis(2-methoxy-2-propyl)benzene, tris(2-methoxy-2-propyl)benzene, bis(2-methoxy-2-propyl)-t-butylbenzene, bis(2-methoxy-2-propyl)bisphenyl, bis(2-methoxy-2-propyl)phenanthrene, bis(2-methoxy-2-propyl)phenylethane, bis(2-methoxy-2-propyl)phenylpropane, 2,4,4-trimethyl-2-methoxypentane, 2,4,4,6-tetramethyl-2,6-dimethoxyheptane, 2,4,6-trimethyl-2,4,6-trimethoxyheptane, 2,4-dimethyl-2,4-dimethoxypentane, 2,5-dimethyl-2,5-dimethoxyhexane, 2,5-dimethyl-2,5-dimethoxy-3-hexyne, 2,5,8-trimethyl-2,5,8-trimethoxynonane, t-butyl methyl ether, sec-butyl methyl ether, isopropyl methyl ether, etc.

Examples of compound having acyloxy group include 2-acetoxy-2-phenylpropane, bis(2-acetoxy-2-propyl)benzene, tris(2-acetoxy-2-propyl)benzene, bis(2-acetoxy-2-propyl)-t-butylbenzene, bis(2-acetoxy-2-propyl)biphenyl, bis(2-acetoxy-2-propyl)phenanthrene, bis(2-acetoxy-2-propyl)phenylethane, bis(2-acetoxy-2-propyl)phenylpropane, 2,4,4-trimethyl-2-acetoxypentane, 2,4,4,6-tetramethyl-2,6-diacetoxyheptane, 2,4,6-trimethyl-2,4,6-triacetoxyheptane, 2,4-dimethyl-2,4-diacetoxypentane, 2,5-dimethyl-2,5-diacetoxyhexane, 2,5-dimethyl-2,5-diacetoxy-3-hexyne, , 2,5,8-trimethyl-2,5,8-triacetoxynonane, triphenylmethyl acetate, t-butyl acetate, sec-butyl acetate, isopropyl acetate, etc.

Particularly preferred among these organic compounds (initiator compounds) are compounds comprising functional group represented by the formula (1) and t-butyl, phenyl or biphenyl group.

Further, metal halide can be used as Lewis acid, and specific examples thereof include $BCl_3$, $BF_3$, $BF_3OEt_2$, $TiCl_4$, $SnCl_4$, $AlCl_3$, $AlRCl_2$, $AlR_2Cl$ (R represents a lower alkyl group having 1 to 5 carbon atoms), $SbCl_5$, $SbF_5$, $WCl_6$, $TaCl_5$, etc.

Further, there can be used as amines ammonia, aliphatic and aromatic primary, secondary and tertiary amine compounds. Specific examples are set forth below.

Examples of aliphatic primary amine include methylamine, ethylamine, propylamine, butylamine, pentylamine, hexylamine, heptylamine, octylamine, cyclohexylamine, vinylamine, allylamine, ethylenediamine, propylenediamine, trimethylenediamine, tetramethylenediamine, pentamethylenediamine, hexamethylenediamine, cyclohexylenediamine, etc.

Examples of aliphatic secondary amine include dimethylamine, diethylamine, dipropylamine, dibutylamine, methylethylamine, ethylbutylamine, dicyclohexylamine, etc.

Examples of aliphatic tertiary amine include trimethylamine, triethylamine, tripropylamine, tributylamine, diethylmethylamine, dipropylethylamine, dimethylhexylamine, dimethyloctylamine, dimethylcyclohexylamine, diethylcyclohexylamine, dicyclohexylethylamine, quinuclidine, etc.

Examples of other amines include aniline, N-methylaniline, N-ethylaniline, N,N-dimethylaniline, N,N-diethylaniline, N-methyl-N-ethylaniline, N,N-dimethylbenzylaniline, vinylaniline, toluidine, xylidine, benzylamine, dibenzylamine, N-ethylbenzylamine, diphenylamine, triphenylamine, piperidine, methylpiperidine, ethylpiperidine, dipiperidinomethane, pyrrolidine, methylpyrrolidine, butylpyrrolidine, indole, methylindole, methylpiperazine, dimethylpiperazine, pyrrole, methylpyrrole, carbazole, methylcarbazole, ethylcarbazole, phenylenediamine, biphenylamine, benzidine, naphthylamine, methylnaphthylamine, phenylnaphthylamine, dinaphthylamine, naphthalenediamine, tetrahydronaphthylamine, etc.

Examples of cationically polymerizable vinyl monomer include isobutylene, propylene, 1-butene, 2-butene, 2-methyl-1-butene, 3-methyl-1-butene, pentene, 4-methyl-1-pentene, hexene, vinylcyclohexane, styrene, methylstyrene, t-butylstyrene, monochlorostyrene, dichlorostyrene, methoxystyrene, α-methylstyrene, β-methylstyrene, dimethylstyrene, butadiene, isoprene, cyclopentadiene, methyl vinyl ether, ethyl vinyl ether, isobutyl vinyl ether, methyl propenyl ether, ethyl propenyl ether, β-pinene, indene, acenaphthylene, etc.

Use rate of the initiator compound, Lewis acid, amine and vinyl monomer is as follows. It is necessary that the amount of Lewis acid is equimolar or more based on mole number (hereinafter referred to as functional group concentration) of the functional group of the formula (1) playing a role of the initiation point of polymerization in the initiator compound, and mole number of the amine, respectively. Lewis acid is used preferably in an amount of 1 to 100 times, in molar ratio, to the functional group concentration in the initiator compound Amine is used preferably in an amount of 0.01 to 100 times, in molar ratio, to the functional group concentration in the initiator compound. A condition that amine is used in an amount larger than that of Lewis acid is not preferred because in such a condition polymerization rate is very low. Vinyl monomer is used in an amount of 5 to 10,000 times, preferably 20 to 5,000 times, in molar ratio, to the functional group concentration in the initiator compound.

The order of addition of these components is optional, but it is desirable to add amine before contact of vinyl monomer with Lewis acid.

Organic acid used in this invention is not particularly limited so long as it does not have a bad influence on polymerization activity of the initiator system. Examples thereof include aliphatic organic solvents such as butane, pentane, hexane and heptane; aromatic organic solvents such as benzene, toluene and xylene; nitro compounds such as nitromethane and nitroethane; and halogenated organic solvents; and mixed solvents thereof.

Polymerization temperature is not particularly limited so long as it is -120 to 50 °C, and preferably -100 to 20 °C.

Polymerization time is not particularly limited. Polymerization time (polymerization rate) can be controlled by amount of the initiator compound, Lewis acid and amine.

Molecular weight can be controlled by the ratio of concentration of the initiator compound to concentration of the vinyl compound.

If desired, it is possible to prepare a block copolymer by adding one cationically polymerizable vinyl monomer, initiator compound, Lewis acid and amine in the polymerization system to complete the polymerization substantially and followed by adding another cationically polymerizable vinyl monomer to the system to carry out a further polymerization.

Thus according to the present invention, by, in polymerization of cationically polymerizable vinyl monomer, carrying out the polymerization with organic compound having the functional group represented by the formula (1), Lewis acid and amine, a polymer having a narrow molecular weight distribution and having controlled molecular weight and end structure can be prepared in a controlled polymerization rate, in

comparison to the usual techniques.

Further, a block copolymer whose molecular weight is optionally controlled can be provided by successively polymerization of at least two different vinyl monomers according to the process of this invention. Further, it is possible by adding the compound having functional groups which react with the growing carbenium ion to introduce functional group at the terminal of the polymer.

This invention is further concretely described according to the following examples.

Percent in examples and comparative examples is based on weight unless otherwise defined.

## Example 1

0.84 g (15 mmol) of isobutylene, 2.3 mg (10 µmol) of bis(2-chloro-2-propyl)benzene (DiCumCl), 2.5 mg (25 µmol) of triethylamine, 3.8 ml of methylene chloride and 3.8 ml of n-hexane were added to a glass vessel under a dry nitrogen atmosphere, and the mixture was cooled at -55 °C. Then, 1.0 ml ($TiCl_4$ 0.3 mmol) of 0.3 molar solution of $TiCl_4$ in methylene chloride/n-hexane (volume ratio l/l) previously cooled at -55 °C was added, and the polymerization started. After polymerization for the predetermined time, 2.0 ml of methanol was added and the polymerization stopped, and the reaction mixture was poured in a large amount of methanol to precipitate the polymer. Then, the unreacted starting materials and the solvents were removed and the desired polymer was obtained.

Number average molecular weight (Mn) and Mw/Mn (Mw is weight average molecular weight) were determined by GPC (HLC-8020 produced by Toso Co., Ltd.).

Theoretical molecular weight (M.W. calcd.) was calculated according to the following equation in case that all the initiator molecules effectively worked and moreover a chain transfer reaction and a termination reaction did not occur during the polymerization. In the following equation, conv. (%) is polymerization conversion.

$$\text{M.W. calcd.} = \frac{\text{Amount (g) of charged vinyl monomer}}{\text{Amount (mol) of initiator compound}} \times \frac{\text{conv. (\%)}}{100} + \text{Molecular weight of the initiator compound}$$

Results were shown in Table 1.

Table 1

| Example | Polymerization time (hours) | conv. (%) | Mn (M.W. calcd.) x $10^{-4}$ | Mw/Mn |
|---|---|---|---|---|
| 1 | 0.5 | 25 | 2.1 (2.1) | 1.14 |
| | 1 | 38 | 3.4 (3.2) | 1.11 |
| | 2 | 67 | 5.5 (5.6) | 1.12 |
| | 5 | 94 | 6.7 (7.9) | 1.19 |

As is shown in Table 1, conv. increases with the polymerization time and Mn also increases in proportion to conv. Further, Mn became almost equal to M.W. calcd., and Mw/Mn also became extremely close to 1.

## Example 2

With the same procedures as in Example 1, the polymerization of isobuttlene for the predetermined time was carried out except that the addition amount of triethylamine was changed to 1.0 mg (10 µmol).

Results are shown in Table 2.

Table 2

| Example | Polymerization time (hours) | conv. (%) | Mn (M.W. calcd.) x $10^{-4}$ | Mw/Mn |
|---|---|---|---|---|
| 2 | 0.25 | 14 | 1.0 (1.2) | 1.31 |
| | 0.5 | 23 | 1.7 (1.9) | 1.14 |
| | 1 | 40 | 3.0 (3.4) | 1.13 |
| | 2 | 68 | 4.1 (5.7) | 1.15 |

As is shown in Table 2, even when the addition amount of triethylamine is reduced to half or less compared to that in Example 1, Mn increases in proportion to conv. and Mw/Mn is close to 1.

Example 3

With the same procedures as in Example 1, the polymerization for the predetermined time was carried out except that 0.52 g of styrene was used in place of isobutylene as vinyl monomer. Results are shown in Table 3.

Table 3

| Example | Polymerization time (hours) | conv. (%) | Mn (M.W. calcd.) x $10^{-4}$ | Mw/Mn |
|---|---|---|---|---|
| 3 | 0.5 | 46 | 2.2 (2.4) | 1.39 |
| | 1 | 75 | 3.3 (3.9) | 1.36 |
| | 2 | 92 | 4.2 (4.8) | 1.43 |
| | 4 | 100 | 5.4 (5.2) | 1.76 |

As is shown in Table 3, in styrene, both polymerization conversion and Mn increased with polymerization time, as in isobutylene. Further, Mn was nearly equal to M.W. calcd. and Mw/Mn was also close to 1.

Example 4

With the same procedures as in Example 1, the polymerization of styrene for the predetermined time were carried out except that use amount of triethylamine was increased to 5.2 mg (50 µmol). Results are shown in Table 4-1.

Table 4-1

| Example | Polymerization time (hours) | conv. (%) | Mn (M.W. calcd.) x $10^{-4}$ | Mw/Mn |
|---|---|---|---|---|
| 4 | 0.5 | 48 | 1.6 (2.5) | 1.40 |
| | 1 | 58 | 1.8 (3.0) | 1.41 |
| | 2 | 83 | 2.9 (4.3) | 1.38 |
| | 4 | 96 | 3.7 (5.0) | 1.50 |

After the above polymerization was carried out for 5 hours, the same amount of styrene (0.52 g) was added and the polymerization was continued.

Table 4-2

| Polymerization time (hours) | conv. (%) | Mn (M.W. calcd.) x $10^{-4}$ | Mw/Mn |
|---|---|---|---|
| 6 | 122 | 4.6 (6.4) | 1.72 |
| 7 | 138 | 4.9 (7.2) | 1.83 |
| 8 | 150 | 6.0 (7.8) | 1.83 |
| 9 | 158 | 6.5 (8.2) | 1.85 |

As is shown in Table 4-2, polymerization proceeded without deactivation, and Mn further increased with the increase of conv.

Comparative example 1 and 2

With the same procedures as in Example 1, the polymerization for the predetermined times were conducted except that isobutylene or styrene were used as vinyl monomers and initiator compound and amine were not added (only $TiCl_4$ alone was used). Results are shown in Table 5.

Table 5

| Comparative example | Vinyl monomer | Polymerization time (minutes) | conv. (%) | Mn x $10^{-4}$ | Mw/Mn |
|---|---|---|---|---|---|
| 1 | isobutylene | 5 | 95 | 10.9 | 3.01 |
| 2 | styrene | 5 | 100 | 1.7 | 5.02 |

As is shown in Table 5, in case of $TiCl_4$ only, polymerization rate is extremely fast and molecular weight distribution of the obtained polymer is broader in comparison to those in Example 1.

Comparative example 3 and 4

With the same procedures as in Example 1, the polymerization for the predetermined times were carried out except that isobutylene or styrene were used as vinyl monomers and no amine was added ($TiCl_4$ and DiCumCl was used). Results are shown in Table 6.

Table 6

| Comparative example | Vinyl monomer | Polymerization time (minutes) | conv. (%) | Mn(M.W.calcd.) x $10^{-4}$ | Mw/Mn |
|---|---|---|---|---|---|
| 3 | isobutylene | 5 | 92 | 5.9 (7.7) | 3.49 |
| 4 | styrene | 5 | 100 | 1.7 (5.2) | 4.39 |

As is shwon in Table 6 using $TiCl_4$ and DiCumCl (without amine) polymerization rate is extremely faster and molecular weight distribution of the obtained polymer is broader in comparison to those in Example 1.

Comparative example 5 and 6

Isobutylene polymerizations were carried out with $TiCl_4$ and triethylamine for the predetermined times 1 except without triethylamine. Results are shown in using the same procedures as in Example 1 except without triethylamine. Results are shown in Table 7.

Table 7

| Comparative example | Polymerization time (hours) | conv. (%) | Mn x $10^{-4}$ | Mw/Mn |
|---|---|---|---|---|
| 5 | 1 | 4 | 5.6 | 2.98 |
| 6 | 5 | 5 | 5.5 | 3.40 |

As is shown in Table 7, in combination of $TiCl_4$/triethylamine without the initiator compound, even when reaction time is extended, polymerization rarely proceeds or polymerization stops. Moreover, molecular weight distribution are broader in comparison to those in Example 1.

As is shown in the above comparative examples, it becomes possible to control polymerization rate and further to control molecular weight of the polymer only when the three components of the initiator compound, Lewis acid and amine are used.

Examples 5 and 6

Polymerization of 0.84 g of isobutylene or 0.52 g of styrene was carried out using 2.3 mg (10 μmol) of bis(2-chloro-2-propyl)benzene (DiCumCl) as initiator compound and 0.3 mmol of $TiCl_4$ as Lewis acid, adding 3.8 ml of methylene chloride and 3.8 ml of n-hexane, and using various shown in amine. Results are shown in Table 8. As is shown in the Table 8, polymers whose a Mn were nearly equal to M.W. calcd. and Mw/Mn were close to 1 were obtained as those in Example 1.

Table 8

| Example | Vinyl monomer | | Amine | | Polymerization time (hour) | conv. (%) | Mn(M.W.calcd.) x $10^{-4}$ | Mw/Mn |
|---|---|---|---|---|---|---|---|---|
| | | Charged amount (g) | | Added amount (mg) | | | | |
| 5 | isobutylene | 0.84 | N,N-diisopropylethylamine | 1.3 | 4 | 90 | 9.7 (7.6) | 1.23 |
| 6 | styrene | 0.52 | N,N-dimethylaniline | 3.0 | 2 | 65 | 2.8 (3.4) | 1.71 |

Examples 7 to 9

Isobutylene 0.56 g (10 mmol), 1.5 mg (10 µmol) of 2-methoxy-2-phenylpropane (CumOMe), the predetermined amount of diethylamine, 4.0 ml of methylene chloride and 4.0 ml of n-hexane were placed in a glass vessel under a dry nitrogen atmosphere, and the mixture was cooled to -50 °C. Then, the polymerization was started by the addition of 1.0 ml ($TiCl_4$ 0.3 mmol) of 0.3 M solution of $TiCl_4$ in methylene chloride/n-hexane (volume ratio 1/1) previously cooled to -50 °C. After the predetermined time, the reaction was quenched by the addition of 3.0 ml of methanol, and the solvents were evaporated to obtain the desired polymer. Polymerization conditions and results were shown in Table 9.

Table 9

| Example | Diethylamine Added amount (mmol) | Polymerization time (hours) | conv. (%) | Mn(M.W.calcd.) x $10^{-4}$ | Mw/Mn |
|---|---|---|---|---|---|
| 7 | 0.03 | 1 | 15 | 1.1 (0.8) | 1.16 |
| | 0.03 | 2 | 37 | 1.9 (0.4) | 1.17 |
| | 0.03 | 3 | 49 | 2.8 (2.7) | 1.16 |
| | 0.03 | 4 | 73 | 3.5 (4.1) | 1.12 |
| | 0.03 | 6 | 91 | 3.9 (5.1) | 1.12 |
| | 0.03 | 17 | 100 | 4.2 (5.6) | 1.17 |
| 8 | 1.5 | 0.5 | 8 | 0.5 (0.4) | 1.16 |
| | 1.5 | 1 | 14 | 1.0 (0.8) | 1.25 |
| | 1.5 | 2 | 21 | 1.5 (1.2) | 1.11 |
| | 1.5 | 3 | 30 | 1.9 (1.7) | 1.42 |
| 9 | 6.0 | 1 | 17 | 1.2 (1.0) | 1.12 |
| | 6.0 | 2 | 31 | 2.0 (1.7) | 1.08 |
| | 6.0 | 3 | 43 | 2.5 (2.4) | 1.08 |
| | 6.0 | 4 | 59 | 2.9 (3.3) | 1.15 |
| | 6.0 | 6 | 76 | 3.6 (4.3) | 1.12 |
| | 6.0 | 17 | 98 | 4.5 (5.5) | 1.17 |

Examples 10 to 13

The same conditions and procedures as in Example 7 were used in these Examples except that various amines were used. Results are shown in Table 10.

Table 10

| Example | Vinyl monomer | | Amine | | Polymerization time (hour) | conv. (%) | Mn(M.W.calcd.) x $10^{-4}$ | Mw/Mn |
|---|---|---|---|---|---|---|---|---|
| | Kind | Charged amount (g) | Kind | Added amount (mg) | | | | |
| 10 | isobutylene | 0.56 | aniline | 2.2 | 1 | 29 | 1.6 (1.6) | 1.09 |
| | | | | | 2 | 38 | 2.3 (2.1) | 1.13 |
| | | | | | 4 | 54 | 3.3 (3.0) | 1.43 |
| | | | | | 6 | 73 | 3.9 (4.1) | 1.40 |
| 11 | isobutylene | 0.56 | N-methylaniline | 2.2 | 1 | 1 | 1.0 (0.1) | 1.28 |
| | | | | | 2 | 30 | 2.2 (1.7) | 1.30 |
| | | | | | 4 | 55 | 3.2 (3.1) | 1.10 |
| | | | | | 6 | 73 | 4.5 (4.1) | 1.13 |
| 12 | styrene | 0.56 | aniline | 2.2 | 0.25 | 17 | 0.7 (0.9) | 1.59 |
| | | | | | 0.5 | 25 | 1.1 (1.3) | 1.76 |
| | | | | | 1 | 42 | 2.0 (2.2) | 1.32 |
| | | | | | 2 | 58 | 2.1 (3.0) | 1.45 |
| | | | | | 4 | 81 | 2.9 (4.2) | 1.38 |
| | | | | | 6 | 90 | 3.1 (4.7) | 1.43 |
| | | | | | 19 | 96 | 4.0 (5.0) | 1.59 |
| 13 | styrene | 0.56 | diethylamine | 2.2 | 0.25 | 19 | 0.6 (1.0) | 1.76 |
| | | | | | 0.5 | 29 | 1.0 (1.5) | 1.44 |
| | | | | | 1 | 52 | 1.4 (2.7) | 1.32 |
| | | | | | 2 | 73 | 1.8 (3.8) | 1.35 |
| | | | | | 4 | 100 | 2.2 (5.2) | 1.48 |

Example 14

Isobutylene (IB) 1.67 g (30 mmol), 6.9 mg (30 µmol) of bis(2-chloro-2-propyl)benzene (DiCumCl), 7.6 g (75 µmol) of triethylamine, 13 ml of methylene chloride and 13 ml of n-hexane were placed in a glass vessel under a dry nitrogen atmosphere, and cooled to -55 °C. Then, the polymerization was started by the addition of 0.9 ml ($TiCl_4$ 0.9 mmol) of 1.0 molar solution of $TiCl_4$ in methylene chloride/n-hexane (volume ratio 1/1) previously cooled to -55 °C. Five hours thereafter, 0.3 g (2.9 mmol) of styrene (ST) was further added to this reaction solution. Ten hours after the addition of styrene, the polymerization was quenched by the addition of 6.0 ml of methanol, the resulting reaction solution was poured into a large amount of methanol to precipitate the polymer. Then, the obtained product was filtrated. Results are indicated in Table 11.

In the column of molecular weight of the obtained polymer in Table 11, (1) represents the molecular weight isobutylene homopolymer and (2) represetns the molecular weight of block copolymer.

Table 11

| Example | Before or after addition of styrene | Yield (%) | IB conv. | ST conv. | Mn(M.W.calcd.) x $10^{-4}$ | Mw/Mn |
|---|---|---|---|---|---|---|
| | | | (%) | | | |
| 14 | Before | - | 100 | - | (1) 5.4 (5.6) | 1.18 |
| | After | 1.97 | - | 100 | (2) 6.1 (6.6) | 1.23 |

It is seen from the table that when styrene was added after the completion of polymerization of isobutylene, polymerization further proceeded and a block copolymer having a Mn close to its theoretical molecular weight was obtained. Moreover, the Mw/Mn value of the block copolymer became a value extremely close to 1, as in homopolymeri zation of isobutylene.

Example 15

Polymerization of IB-ST block copolymer was carried out increasing the amount of isobutylene (IB) to 2.90 g (52 mmol) and that of styrene (ST) to 0.50 g (4.8 mmol) according to the same conditions and procedures as in Example 14. Results are indicated in Table 12.

In the column of Mn (1) represents molecular weight of the isobutylene homopolymer and (2) represents molecular weight of the block copolymer.

Table 12

| Example | Before or after addition of styrene | Yield (%) | IB conv. | ST conv. | Mn(M.W.calcd.) x $10^{-4}$ | Mw/Mn |
|---|---|---|---|---|---|---|
| | | | (%) | | | |
| 15 | Before | - | 100 | - | (1) 9.3 (9.7) | 1.18 |
| | After | 3.35 | - | 90 | (2)10.1(11.4) | 1.33 |

**Claims**

1. In a process of polymerizing at least one cationically polymerizable vinyl monomer using an initiator consisting of Lewis acid and organic compound having functional group represented by the formula (1)

$$\begin{array}{c} R^1 \\ | \\ -C-X \\ | \\ R^2 \end{array} \qquad (1)$$

wherein $R^1$ represents hydrogen, an alkyl group or an aryl group, $R^2$ represents an alkyl or aryl group, and X represents halogen, an alkoxy group or an acyloxy group, a process for preparation of a polymer of the vinyl monomer which comprises the polymerization is carried out in the presence of amine.

2. The process for preparation according to the above 1 wherein the polymer is a block copolymer.

3. The process for preparation of the block copolymer according to the above 2 which comprises, after substantial completion of polymerization of one cationically polymerizable vinyl monomer, successively adding another cationically polymerizable vinyl monomer to complete the polymerization.

4. The process for preparation according to claim 2 wherein the block copolymer is copolymer comprising isobutylene and styrene.

5. The process for preparation according to claim 1 wherein the amine is selected from the group consisting of ammonia, aliphatic primary, secondary and tertiary amine comounds, and aromatic primary, secondary and tertiary amine compounds.

6. The process for preparation of the polymer according to claim 1 wherein the Lewis acid is $TiCl_4$.

7. The process for preparation according to claim 1 wherein the organic compound is compound comprising functional group represented by the formula (1), and methyl, t-butyl, phenyl or biphenyl group.

8. The process for preparation of the polymer according to claim 1 wherein X is chlorine, a methoxy group or an acetoxy group.

9. The process for preparation of the polymer according to claim 1 wherein the amine is selected from the group consisting of ethylamine, diethylamine, triethylamine, N,N-diisopropylethylamine, aniline, N-methylaniline and N,N-dimethylaniline.